# EUROPEAN PATENT SPECIFICATION

(11) **EP 0 555 939 B1**
(45) Date of publication and mention of the grant of the patent: **21.08.1996**
(21) Application number: 93200436.9
(22) Date of filing: 15.02.1993
(51) Int. Cl.: B65F 1/00

(54) **Transportable container and method for collecting and/or processing of recyclable waste**
Transportbehälter und Verfahren zur Sammlung und/oder Verarbeitung von wiederverwertbarem Abfall
Récipient transportable et procédé pour collecter et/ou traiter des déchets recyclables

(30) Priority: 13.02.1992 NL 9200260
(43) Date of publication of application: 18.08.1993
(73) Proprietor: Van Kraaikamp Beheer B.V., 3784 WE Terschuur (NL)
(72) Inventor: van den Hoek, Johannes Gijsbertus, NL-6823 AB Arnhem (NL); van Kraaikamp, Albert Adrianus, NL-3784 WE Terschuur (NL)
(74) Representative: Bartelds, Erik

(56) References cited:
- US-A- 5 058 957
- US-A- 5 058 957

## Description

The invention relates to a displaceable device and a method for collecting and/or processing waste separated according to type from events such as markets, fairs and the like.

During market days and town or village festivities the large quantities of refuse produced therein are often a source of problems. After the market or fair is over, overflowing containers, stacked crates and boxes, possibly reeking organic refuse and empty food containers are to be found at diverse points on the market place. The refuse from such markets and fairs is generally disposed of in ordinary containers, compacting containers and mechanical garbage trucks in order to be dumped or burned. This is however a very costly operation. The cost of disposing of the waste in this manner only increases as environmental requirements become more stringent. In addition, incineration of such quantities of mixed refuse is very environmentally-unfriendly in view of the air pollution and overfull dumping sites.

A device is known from U.S. patent specification 5,058,957 which discloses a container for sorting and collecting recoverable waste products. The container has fixed partitions providing discrete compartments for those waste products. Loading doors are positioned proximal the top of the container. However, the container is subdivided into compartments but does not comprise separate storage and processing units that are accessible through an open side of the container.

WO-A-9113010 discloses a device in accordance with the preamble of claim 1. The domestic waste processor described comprises processing means and means for collecting the processed waste. The collecting means are removable, whereas the processing means are an integral part of the device.

It is the object of the present invention to provide an improved device and method for collecting and/or processing waste separated according to type from events such as markets, fairs and the like.

The invention provides to this end a device comprising a container open on at least one side, provided with means for closing the open side and a number of storage and processing units for the individual types of waste wherein said open side is adapted to allow a user to walk into the container for delivering waste to said storage and processing units arranged therein. In addition the invention provides a method comprising of arranging a displaceable device according to the invention on or close to a market place, supplying the waste for collection, separating the waste into a number of waste types in or close to a container, storing and/or processing the individual waste types in storage and/or processing units and transporting the device to a definitive storage and/or processing location by means of a container vehicle.

The means for closing the open side of the device are preferably formed by a container side wall which can be folded at least partially downward. Situated in the container are the storage and processing units which become accessible by folding down at least one container side wall.

The waste is preferably carried by the market traders or fair stall-holders themselves to the container, where the delivered waste is separated by hand into a number of waste types. Said types of waste are for instance plastic, potato/vegetable/fruit waste, fish waste, paper and cardboard, wood and residual waste. The separate waste types are stored and/or processed in the different units in the container. It is thus possible to grind particularly the waste types paper and cardboard, wood and residual waste in a grinding device. In this way the volume of the waste decreases to a significant extent, whereby less storage space or dumping space is needed for the final definitive storage or disposal.

The separated and optionally processed waste is preferably packed in moisture-tight bags. Such a packing method is particularly suitable for waste types which are placed temporarily in intermediate storage prior to definitive storage or disposal. Intermediate storage can for instance take place in order to collect a larger quantity of one type of waste, whereby disposal or processing thereof becomes more cost-effective.

When the waste has been collected, the container side walls will be folded up and the container can be loaded for instance on a container vehicle. The waste is then transported in the displaceable device to for instance the municipal storage site or a definitive processing or dumping site.

In preference the container is provided on its top with a closure of sheeting foldable out to a market stall-like awning. The market stall-like awning provides the device with an attractive appearance that fits well into the market surroundings. In an alternative case the upper part of the container is closed off by a plate of metal or other material. Preferably the plate is fixedly connected to the container and provided with canopy plates connected hingedly thereto and forming part of the side wall of the container. The side wall is constructed in this case from a downward foldable portion and an upward foldable canopy portion. The advantage of such a construction is that, during storage of the device on for instance sites accessible to the public, vandals can no longer gain access to the inside of the container in relatively simple manner. In preference the storage and/or processing units are provided with a colour code corresponding to the type of waste.

By means of the device and method according to the invention 80% of the waste can be processed in environmentally-friendly manner. Potato/vegetable/fruit waste is processed for instance by composting firms. Paper and cardboard, wood, plastic and fish waste can be re-used. The residual waste is generally dumped.

The present invention will be further elucidated with reference to a number of drawings of one embodiment of the invention in which like reference numerals refer to like components, and in which:
figure 1 shows a partly broken away perspective view of a displaceable device according to the invention in operation;
figure 2 shows a schematic top view of a displaceable device according to the invention; and
figure 3 is a perspective view of loading of the displaceable device on a container vehicle for transport.

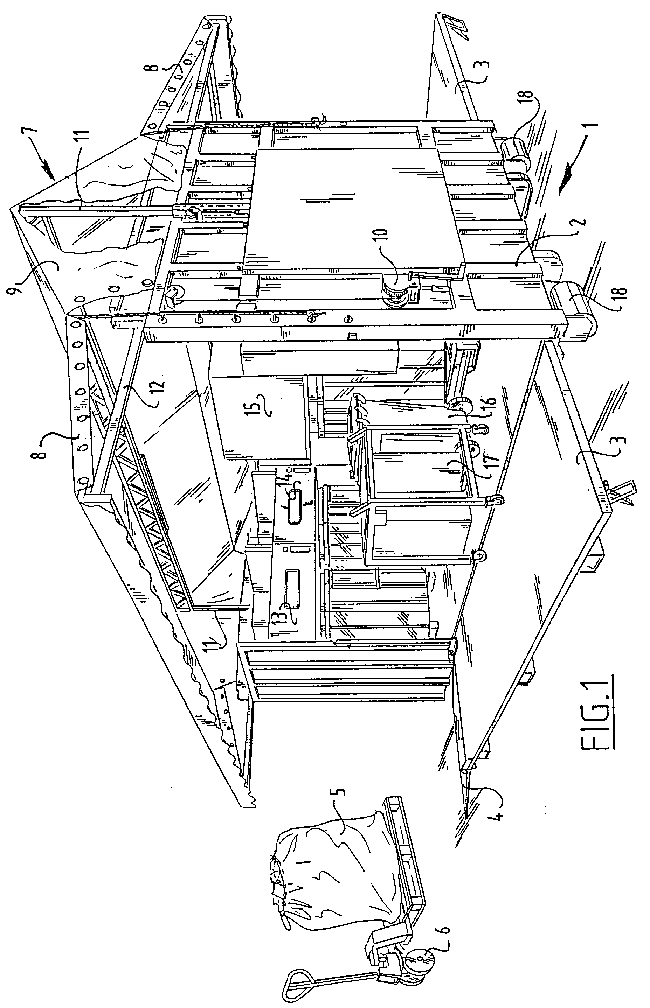

Figure 1 shows the device 1 comprising a container 2, the side walls 3 of which are folded downward. The downward folded side walls 3 of container 2 are joined to a ramp 4 over which waste 5 can be supplied by means of trolleys or hand trucks 6. The shown container is covered by a market stall-like awning 7 consisting of two canopies 8 and a tent part 9 located therebetween. The intermediate tent part 9 is in and outwardly slidable. By means of a pulley mechanism 10 the posts 11 of the intermediate tent part 9 can be retracted and extended. The canopies 8 can be folded outward, optionally at the same time, by means of the profiles 12. In the folded closed situation the container side walls 3 do not extend wholly to the top of container 2. When the container is folded fully closed the thereby remaining openings are closed off by the canopies. In the alternative embodiment the openings are closed off by the canopy plates.

Situated in the container are a number of storage and processing units. The combination shown here comprises three grinding devices 13, 14 and 15 and two sorts of waste bins 16 and 17 of different dimensions. A great variety of different combinations of storage and/or processing units is of course possible within the scope of the invention.

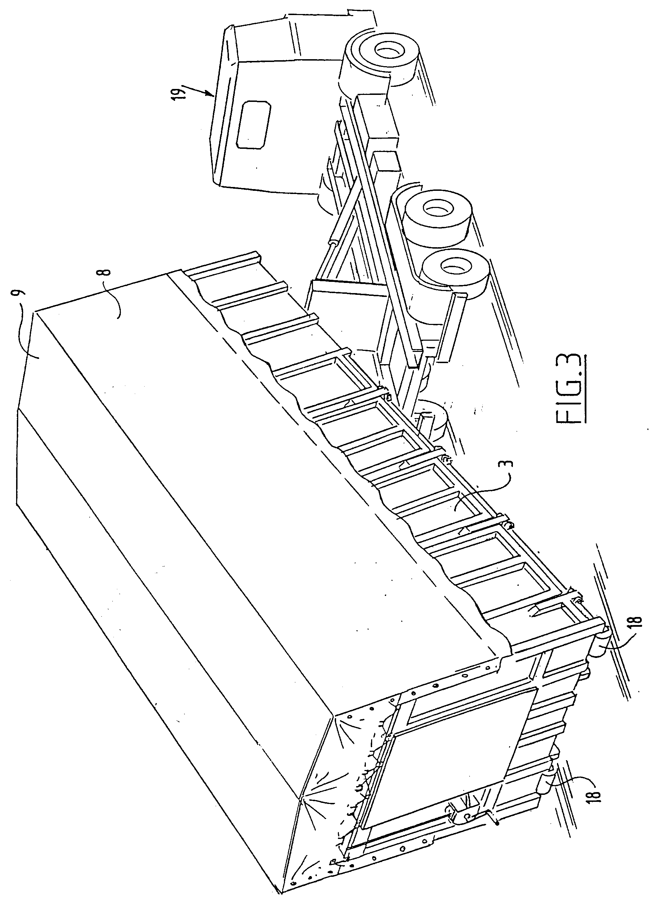

The container is provided on one end with transporting rollers 18 for rolling the container on and off a container vehicle (see figure 3).

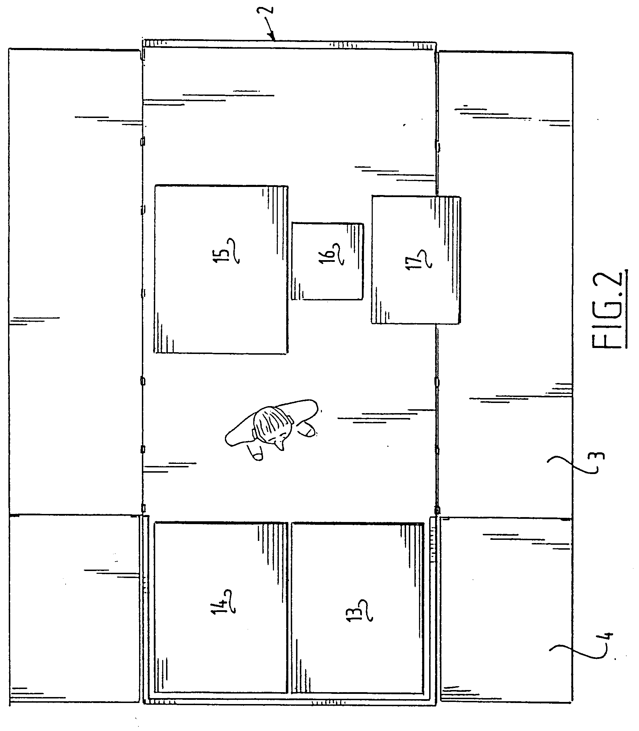

Figure 2 shows a schematic top view of a device according to the invention. The waste is carried via the ramps 4 over the folded down side walls 3 to the container 2. In container 2 the waste is manually separated and distributed over the different types of storage and/or processing units 13, 14, 15, 16 and 17.

After collection of the waste is completed the container side walls 3 and the canopies 8 are folded inward and the intermediate tent part 9 is lowered. Thereby formed is a completely closed container in which both the storage and processing units and the separated waste are situated. Figure 3 shows how the device is loaded onto a container vehicle 19. The latter contains for this purpose a cable system or a hooking arm (not shown). In order to facilitate roll-on/roll-off of the device the container is provided on one end with transporting rollers 18. The device is transported on the container vehicle to a location where the already separated waste can be further processed or stored.

The present invention provides a device and method for separate collection of for instance market refuse in a responsible manner. Depending on the nature of the provided waste an average 80% of the waste can be processed in an environmentally-friendly manner. In addition the transport costs of disposal of the waste are decreased to a significant extent by already reducing the volume of the waste. After the departure of the device on the container vehicle a clean and cleared market place remains. Because collection of the waste can already take place partly during the market or fair, extra retail space is created which, in the previous situation, was occupied by the accumulating waste.

## Claims

1. Displaceable device for collecting and processing waste separated according to type from events such as markets, fairs and the like, comprising a container open on at least one side, provided with means for closing the open side and a number of storage and processing units for the individual types of waste, **characterized in that** said open side is adapted to allow a user to walk into the container for delivering waste to said storage and processing units arranged therein.

2. Displaceable device as claimed in claim 1, **characterized in that** the means for closing the open side are formed by a container side wall which can be folded at least partially downward.

3. Displaceable device as claimed in claim 1 or 2, **characterized in that** the container is provided on its top with a closure of sheeting foldable out to a market stall-like awning.

4. Displaceable device as claimed in claim 1, 2 or 3, **characterized in that** the container is closed off on its top by a roof plate hingedly connected to canopy plates forming part of the side walls of the container.

5. Displaceable device as claimed in any of the claims 1, 2, 3 or 4, **characterized in that** the storage and processing units are formed by devices for grinding wood, paper and cardboard or residual waste and by waste bins for potato/vegetable/fruit waste, fish waste or plastic.

6. Displaceable device as claimed in any of the foregoing claims, **characterized in that** the device is suitable for transport thereof on a container vehicle.

7. Displaceable device as claimed in claim 6, **characterized in that** the container is provided on at least one end with transporting rollers.

8. Method for collecting and/or processing waste separated according to type from events such as markets, fairs and the like, by arranging a device as claimed in any of the foregoing claims on or close to a market place, supplying the waste for collection, separating the waste into a number of waste types in or close to the container, storing and/or processing the individual waste types in the storage and/or processing units and transporting the device to a definitive storage and/or processing location by means of a container vehicle.

9. Method as claimed in claim 8, **characterized in that** the waste is separated by hand into a number of waste types.

10. Method as claimed in claim 8 or 9, **characterized in that** the waste types are wood, paper and cardboard, plastic, potato/vegetable/fruit waste, fish waste and residual waste.

11. Method as claimed in any of the claims 8-10, **characterized in that** the processing takes the form of grinding the separated waste.

12. Method as claimed in any of the claims 8-11, **characterized in that** the stored and/or processed waste is packed in moisture-tight bags.

## Patentansprüche

1. Ortsbewegliche Einrichtung zum Sammeln und Verarbeiten von typensortiertem Abfall von Veranstaltungen wie Märkten, Messen u.dgl., mit einem an mindestens einer Seite offenen Behälter, der Mittel zum Verschließen der offenen Seite und eine Anzahl von Sammel- und Verarbeitungseinheiten für die einzelnen Abfallsorten aufweist, dadurch **gekennzeichnet,** daß die offene Seite so ausgebildet ist, daß ein Benutzer in den Behälter gehen kann, um Abfall zu den darin angeordneten Sammel- und Verarbeitungseinheiten zu bringen.

2. Ortsbewegliche Einrichtung nach Anspruch 1, dadurch **gekennzeichnet**, daß die Mittel zum Verschließen der offenen Seite aus einer Behälterseitenwand bestehen, die mindestens teilweise heruntergeklappt werden kann.

3. Ortsbewegliche Einrichtung nach Anspruch 1 oder 2, dadurch **gekennzeichnet,** daß der Behälter an seiner Oberseite mit einer Abdeckplane versehen ist, die zur Bildung einer Markise nach Art eines Marktstandes ausklappbar ist.

4. Ortsbewegliche Einrichtung nach Anspruch 1, 2 oder 3, dadurch **gekennzeichnet,** daß der Behälter an seiner Oberseite durch eine Dachplatte abgeschlossen ist, die scharnierartig mit Vordachplatten verbunden ist, die Teil der Seitenwände des Behälters sind.

5. Ortsbewegliche Einrichtung nach einem der Ansprüche 1, 2 oder 3, dadurch **gekennzeichnet,** daß die Sammel- und Verarbeitungseinheiten aus Einrichtungen zum Zerkleinern von Holz, Papier und Karton oder Restmüll sowie aus Abfalltonnen für Kartoffel/Gemüse/Obst-Abfall, Fischabfall oder Kunststoff bestehen.

6. Ortsbewegliche Einrichtung nach einem der vorangehenden Ansprüche, dadurch **gekennzeichnet,** daß die Einrichtung auf einem Containerfahrzeug transportierbar ist.

7. Ortsbewegliche Einrichtung nach Anspruch 6, dadurch **gekennzeichnet,** daß der Behälter an mindestens einem Ende mit Transportrollen versehen ist.

8. Verfahren zum Sammeln und/oder Verarbeiten von typensortiertem Abfall von Veranstaltungen wie Märkten, Messen od.dgl., durch Anordnen einer Einrichtung nach einem der vorangehenden Ansprüche an oder nahe der Marktfläche, Anliefern des zu sammelnden Abfalls, Sortieren des Abfalls in eine Anzahl von Abfalltypen in oder nahe dem Behälter, Sammeln und/oder Verarbeiten der einzelnen Abfalltypen in den Sammel- und/oder Verarbeitungseinheiten und Transportieren der Einrichtung zu einer Endlager- und/oder Verarbeitungsstelle mittels eines Containerfahrzeugs.

9. Verfahren nach Anspruch 8, dadurch **gekennzeichnet,** daß der Abfall von Hand in mehrere Abfallsorten sortiert wird.

10. Verfahren nach Anspruch 8 oder 9, dadurch **gekennzeichnet,** daß die Abfallsorten Holz, Papier und Pappe, Kunststoff, Kartoffel/Gemüse/Obstabfälle, Fischabfälle und Restmüll sind.

11. Verfahren nach einem der Ansprüche 8 bis 10, dadurch **gekennzeichnet,** daß die Verarbeitung durch Zerkleinern des sortierten Abfalls erfolgt.

12. Verfahren nach einem der Ansprüche 8 bis 11, dadurch **gekennzeichnet,** daß der gesammelte und/oder verarbeitete Abfall in feuchtigkeitsdichte Säcke abgepackt wird.

## Revendications

1. Dispositif déplaçable destiné à collecter et à traiter des déchets séparés selon le type et provenant d'évènements tels que des marchés, des foires ou analogues, ce dispositif comprenant un récipient ouvert sur l'un au moins de ses côtés, muni de moyens servant à fermer le côté ouvert et d'un nombre d'unités de stockage et de traitement de types particuliers de déchets, caractérisé en ce que ledit côté ouvert est adapté pour permettre à un utilisateur de pénétrer à l'intérieur du récipient de manière à fournir des déchets auxdites unités de stockage et de traitement disposées à l'intérieur de ce récipient.

2. Dispositif déplaçable selon la revendication 1, caractérisé en ce que les moyens servant à fermer le côté ouvert sont constitués par une paroi latérale de récipient qui peut être pliée au moins partiellement vers le bas.

3. Dispositif déplaçable selon la revendication 1 ou 2, caractérisé en ce que le récipient possède, à sa partie supérieure, un revêtement de fermeture pouvant être plié sous la forme d'une bâche analogue à un stand de marché.

4. Dispositif déplaçable selon la revendication 1, 2 ou 3, caractérisé en ce que le récipient est fermé, à sa partie supérieure, par une plaque formant toit reliée de manière articulée à des plaques formant abri et faisant partie des parois latérales du récipient.

5. Dispositif déplaçable selon l'une quelconque des revendications 1, 2, 3 ou 4, caractérisé en ce que les unités de traitement et de stockage sont constituées par des dispositifs de broyage de bois, de papier et de carton ou de déchets résiduels et par des poubelles de déchets pour des déchets de fruits/légumes/pommes de terre, des déchets de poissons ou des matières plastiques.

6. Dispositif déplaçable selon l'une quelconque des revendications précédentes, caractérisé en ce que le dispositif est approprié pour être transporté sur un véhicule pour récipient.

7. Dispositif déplaçable selon la revendication 6, caractérisé en ce que le récipient possède, à au moins l'une des ses extrémités, des rouleaux de transport.

8. Procédé de collecte et/ou de traitement de déchets séparés selon le type et provenant d'évènements tels que des marchés, des foires ou analogues, en plaçant un dispositif selon l'une quelconque des revendications précédentes sur une place de marché ou au voisinage de celle-ci, en fournissant des déchets pour la collecte, la séparation de ces déchets en un nombre de types de déchets dans le récipient ou au voisinage de celui-ci, en stockant et/ou en traitant les types particuliers de déchets dans les unités de stockage et/ou de traitement et en transportant le dispositif vers un emplacement de stockage et/ou de traitement définitif au moyen d'un véhicule pour récipient.

9. Procédé selon la revendication 8, caractérisé en ce que les déchets sont séparés à la main en un nombre de types de déchets.

10. Procédé selon la revendication 8 ou 9, caractérisé en ce que les types de déchets comprennent du bois, du papier et du carton, des matières plastiques, des déchets de fruits/légumes/pommes de terre, des déchets de poissons et des déchets résiduels.

11. Procédé selon l'une quelconque des revendications 8 à 10, caractérisé en ce que le traitement prend la forme d'un broyage des déchets séparés.

12. Procédé selon l'une quelconque des revendications 8 à 11, caractérisé en ce que les déchets stockés et/ou traités sont emballés dans des sacs étanches à l'humidité.
